# EUROPEAN PATENT APPLICATION

(11) **EP 2 613 254 A2**
(43) Date of publication of application: **10.07.2013**
(21) Application number: 13150387.2
(22) Date of filing: 07.01.2013
(51) Int. Cl.: G06F 9/44

(54) **Apparatus and method for partitioning memory area for application preloading in a wireless terminal**

(30) Priority: 09.01.2012 KR 20120002448
(71) Applicant: Samsung Electronics Co., Ltd, Gyeonggi-do 443-742 (KR)
(72) Inventor: Park, Young-Sik, Gyeonggi-do 443-742 (KR)
(74) Representative: Nederlandsch Octrooibureau

(57) **Abstract**

An apparatus and method for partitioning a memory area for application preloading in a wireless terminal so as to efficiently utilize the customer areas of a memory includes a memory including a customer area, which is partitioned into two areas in which different types of applications are respectively stored and is variably adjustable according to an amount of the applications stored in the two areas; and a controller for installing the applications stored in the two areas partitioning the customer area in a user area of the memory in a booting mode of the wireless terminal.

## Description

### BACKGROUND OF THE INVENTION

### Field of the Invention

The present invention relates generally to an apparatus and method for partitioning a memory area for application preloading in a wireless terminal so as to efficiently use customer areas of a memory.

### Description of the Related Art

Recently, wireless terminals use a high-capacity memory such as iNAND™. An application package (APK) is typically preloaded and stored in the memory area at the request of a customer. A process of copying and installing such an APK is not performed each booting but performed only in the initial booting after downloading binary files or software.

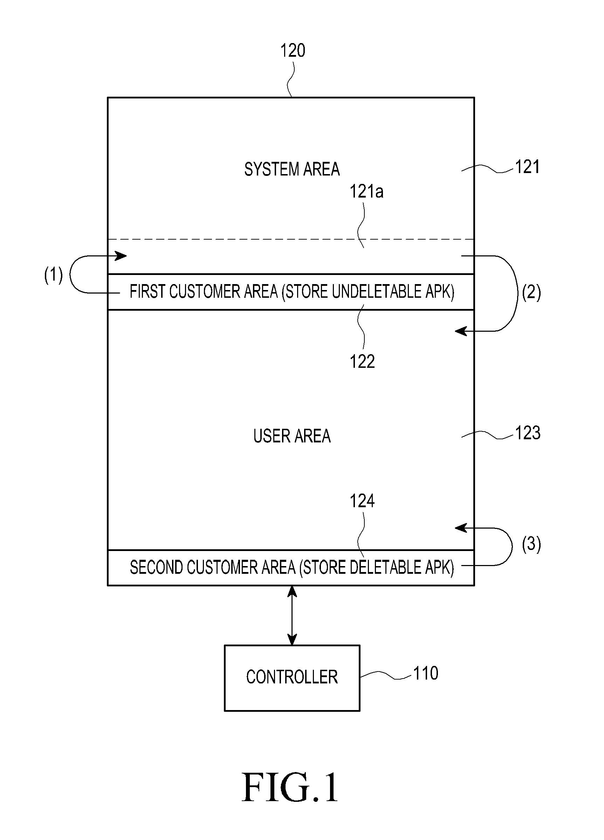

FIG. 1 is a configuration diagram of a conventional apparatus for partitioning a memory area in a wireless terminal. Partitioning a memory is a process whereby a single memory is divided into different sections, which the operating system then treats as individual memory.

Referring to FIG. 1, a memory 120 includes a system area 121, a first customer area 122, a user area 123, and a second customer area 124. In the first customer area 122, an APK that cannot be deleted by a user request is pre-stored, and in the second customer area 124, an APK that can be deleted by a user request is pre-stored.

Thus, when the wireless terminal is turned on and switches to a booting mode, a controller 110 copies an undeletable application stored in the first customer area 122 to a vacant space 121a of the system area 121 (step (1)) and then installs the copied undeletable application in the user area 123 (step (2)). Thereafter, the controller 110 installs a deletable application stored in the second customer area 124 in the user area 123 (step (3)).

As described above, the first customer area 122 and the second customer area 124 in which different types of applications are stored at a customer's request are fixed, and the second customer area 124 in which deletable applications are stored usually secures a larger memory space than the first customer area 122. Memory spaces of the first customer area 122 and the second customer area 124 may vary according to types of wireless terminals. Memory spaces of the first customer area 122 and the second customer area 124 may also vary according to types of wireless terminals and customers' requests.

Thus, the differences in the number of applications supposed to be stored in the first customer area 122 and the number of applications supposed to be stored in the second customer area 124 at the customers' requests may cause inefficiency in the use of the first customer area 122 and the second customer area 124.

Further, the system area 121 must secure the vacant space 121a to store the undeletable application stored in the first customer area 122 therein so that the undeletable application stored in the first customer area 122 is copied to the vacant space 121a of the system area 121 during the booting mode of the wireless terminal. However, the more undeletable applications are stored in the first customer area 122, the more the vacant space 121a in which the undeletable applications stored in the first customer area 122 needs to be secured.

### SUMMARY OF THE INVENTION

An aspect of the present invention is to provide an apparatus and method for efficiently partitioning a memory area for application preloading in a wireless terminal.

According to one aspect of the present invention, there is provided an apparatus for partitioning a memory area for application preloading in a wireless terminal, including: a memory including a customer area, which is partitioned into two areas in which different types of applications are respectively stored and is variably adjustable according to an amount of the applications stored in the respective area; and a controller for installing the applications stored in the two areas partitioning the customer area in a user area of the memory during a booting mode of the wireless terminal.

According to another aspect of the present invention, there is provided an apparatus for partitioning a memory area for application preloading in a wireless terminal, including: a memory including a first customer area in which icons indicating applications are stored and a second customer area in which different types of applications are stored; and a controller for installing the icons stored in the first customer area in a user area of the memory during a booting mode of the wireless terminal.

### BRIEF DESCRIPTION OF THE DRAWINGS

The above features and advantages of the present invention will become more apparent from the following detailed description when taken in conjunction with the accompanying drawing in which:
FIG. 1 is a configuration diagram of an apparatus for partitioning a memory area in a wireless terminal according to prior art;
FIG. 2 is a configuration diagram of an apparatus for partitioning a memory area in a wireless terminal according to an embodiment of the present invention; and
FIG. 3 is a configuration diagram of an apparatus for partitioning a memory area in a wireless terminal according to another embodiment of the present invention.

### DETAILED DESCRIPTION OF THE PREFERRED EMBODIMENT

Preferred embodiments of the present invention will be described herein below with reference to the accompanying drawings. Like reference numbers are used to refer to like elements through at the drawings.

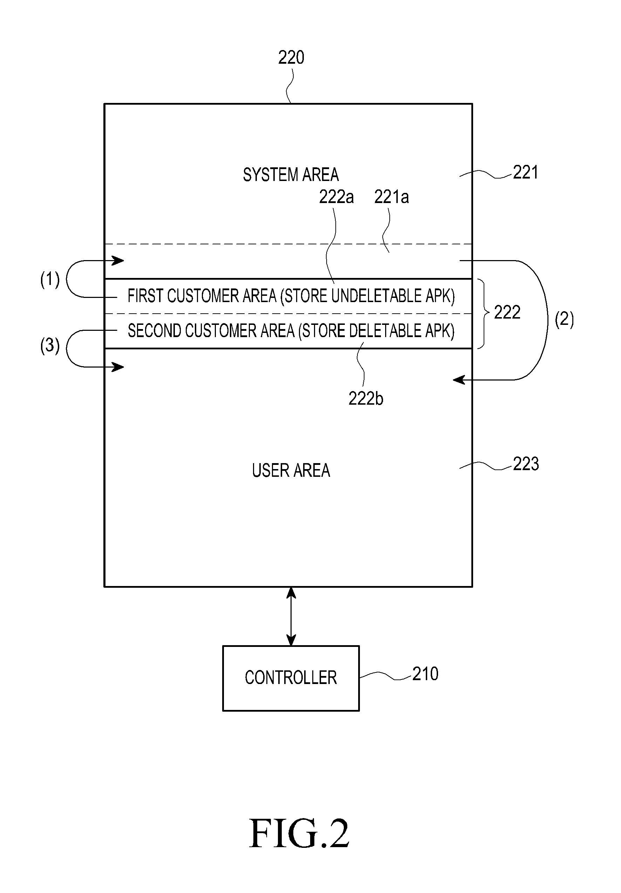

FIG. 2 is a configuration diagram of an apparatus for partitioning a memory area in a wireless terminal according to an embodiment of the present invention. In this embodiment, two areas in which different types of applications are respectively stored in a customer area of a memory are illustratively described as a first customer area and a second customer area.

Referring to FIG. 2, the wireless terminal includes a memory 220 and a controller 210.

The memory 220 includes a system area 221, a customer area 222 partitioned into a first customer area 222a and a second customer area 222b, and a user area 223.

The system area 221 stores programs and data needed to operate the wireless terminal, and during the booting mode of the wireless terminal, undeletable applications stored in the first customer area 222a are copied to a vacant space 221a of the system area 221.

The customer area 222 is divided into the first customer area/partition 222a and the second customer area/partition 222b, wherein an application package (APK) that cannot be deleted by a user at a customer's request is stored in the first customer area 222a, and an APK that can be deleted by the user at a customer's request is stored in the second customer area 222b.

The first customer area 222a and the second customer area 222b may be variably adjusted according to an amount of applications to be stored in a corresponding area.

Thus, according to an amount of applications to be stored in a corresponding area, which is requested by a customer, the first customer area 222a and the second customer area 222b are variably adjusted in a software manner through Application Processor (AP) binary of an application processor. Corresponding applications are stored in each of the variably adjusted first and second customer areas 222a and 222b. In this case, the vacant space 221a of the system area 221 to which the applications in the first customer area 222a are copied during the booting mode of the wireless terminal has a memory size capable of copying the applications in the first customer area 222a thereto.

The user area 223 is a memory space in which applications are actually installed, and the undeletable applications of the first customer area 222a that have been copied to the vacant space 221a of the system area 221 are installed in the user area 223 during the booting mode of the wireless terminal. In addition, deletable applications stored in the second customer area 222b are installed in the user area 223 during the booting mode of the wireless terminal.

When the wireless terminal is turned on and switches to the booting mode, the controller 210 extracts partitioned-area information of the memory 220 through a boot loader during the booting mode and determines the system area 221, the customer area 222 partitioned into the first customer area 222a and the second customer area 222b, and the user area 223.

The controller 210 copies the undeletable applications stored in the first customer area 222a to the vacant space 221a of the system area 221 (step (1)) and then installs the undeletable applications of the first customer area 222a that have been copied to the vacant space 221a of the system area 221 in the user area 223 (step (2)).

Thereafter, the controller 210 installs the deletable applications stored in the second customer area 222b in the user area 223 (step (3)).

As described in FIG. 2, a memory includes one customer area 222, and the customer area 222 comprises a first customer area 222a and a second customer area 222b, in which the first customer area 222a and the second customer 222b are variably adjustable. Therefore, by adjusting a size of the first customer area 222a and the second customer area 222b according to a number and an amount of applications that cannot be deleted and applications that can be deleted, it can solve a prior art problem of inefficiency where some customer area has a sufficient space due to a small number and amount of application and the other customer area lacks a space due to a large number and amount of APK. For example, it will be assumed that there are 11 undeletable applications and 9 deletable applications and all of the applications have the same capacity of 10 megabytes.

In the prior art of FIG. 1, if the first customer area 122, in which undeletable applications are stored, has a memory capacity of 100 megabytes and the second customer area 124, in which deletable applications are stored, also has a memory capacity of 100 megabytes, the 100-megabypte first customer area 122 may lack the memory capacity since it can store only 10 out of the 11 10-megabyte undeletable applications, whereas the 100-megabyte second customer area 124 may store all of the 9 10-megabyte deletable applications, having the remaining memory capacity of 10-megabytes. As a result, while the second customer area 124 has the remaining memory capacity, the first customer area 122 lacks the memory capacity.

However, in the present invention of FIG. 2, it may be assumed that a single customer area 222 includes a first customer area 222a and a second customer area 222b, the capacities of which are variably adjustable, and has a memory capacity of 200 megabytes. In this case, if the memory capacity of the first customer area 222a is adjusted to 110 megabytes and the memory capacity of the second customer area 222b is adjusted to 90 megabytes, the 110-megabyte first customer area 222a may store all of the 11 undeletable applications and the 90-megabyte second customer area 222b may store all of the 9 deletable applications, thereby preventing one customer area from lacking the memory capacity and another customer area from having the remaining memory capacity, thus maximizing the memory capacity.

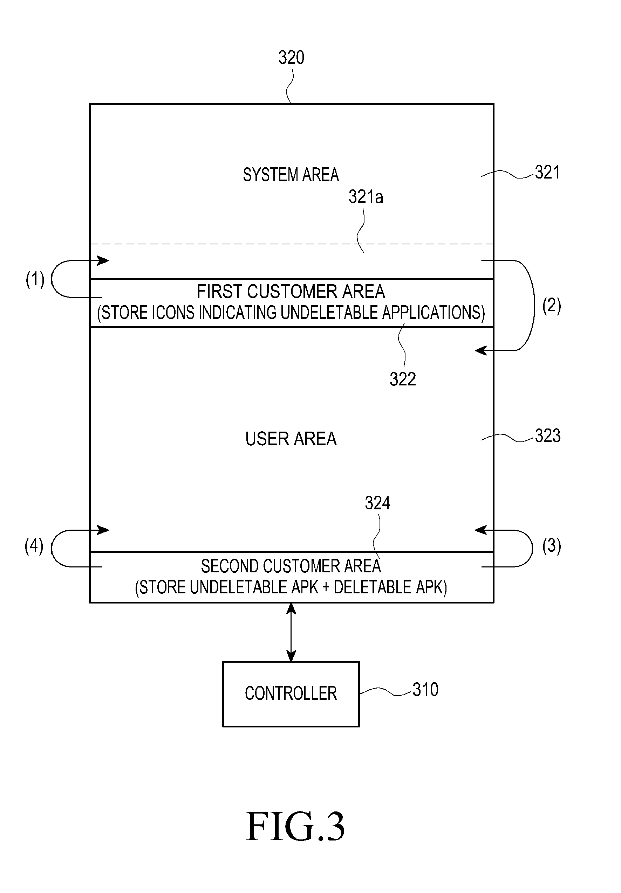

FIG. 3 is a configuration diagram of an apparatus for partitioning a memory area in a wireless terminal according to another embodiment of the present invention. In this embodiment, two areas in which different types of applications are respectively stored in a customer area of a memory are illustratively described as a first customer area and a second customer area.

Referring to FIG. 3, the wireless terminal includes a memory 320 and a controller 310.

The memory 320 includes a system area 321, a first customer area 322, a user area 323, and a second customer area 324.

The system area 321 stores programs and data needed to operate the wireless terminal, and during the booting mode of the wireless terminal, icons, indicating undeletable applications, stored in the first customer area 322 are copied to a vacant space 321a of the system area 321.

The icons indicating applications that cannot be deleted by a user at a customer's request, which are stored in the first customer area 322, are displayed in a form of stub icons. In this case, the vacant space 321a of the system area 321 to which the icons, indicating applications, in the first customer area 322 are copied during the booting mode of the wireless terminal has a memory size capable of copying the icons, indicating applications, in the first customer area 322 thereto.

Meanwhile, the second customer area 324 stores an undeletable application package (APK) corresponding to the icons in the first customer area 322 as well as an APK that can be deleted by the user at a customer's request.

The user area 323 is a memory space in which applications are actually installed, and the icons of the first customer area 322 that have been copied to the vacant space 321a of the system area 321 are installed in the user area 323 during the booting mode of the wireless terminal. In addition, deletable applications stored in the second customer area 324 are installed in the user area 323 during the booting mode of the wireless terminal. In addition, after completing the booting mode of the wireless terminal, an application corresponding to an icon selected from the icons, indicating the undeletable applications, installed in the user area 323 is extracted from the second customer area 324 and installed in the user area 323.

When the wireless terminal is turned on and switches to the booting mode, the controller 310 extracts partitioned-area information of the memory 320 through a boot loader during the booting mode and determines the system area 321, the first customer area 322, the user area 323, and the second customer area 324.

The controller 310 copies the icons, indicating the undeletable applications, stored in the first customer area 322 to the vacant space 321a of the system area 321 (step (1)) and then installs the icons copied to the vacant space 321a of the system area 321 in the user area 323 (step (2)). Thereafter, the controller 310 installs deletable applications from among the applications stored in the second customer area 324 in the user area 223 (step (3)).

If an icon is selected by the user from among the icons of the first customer area 322 that have been installed in the user area 323, the controller 310 extracts an undeletable application corresponding to the selected icon from the second customer area 324 and installs the extracted undeletable application in the user area 323 (step (4)).

As described in Figure 3, icons indicating applications that cannot be deleted are stored in the first customer area 322, and applications that can be deleted and applications that cannot be deleted are stored in a second customer area 324 having a larger space of the memory than the first customer area 322.

Therefore, in a booting mode of the terminal, an empty space of the system area where icons of the first customer area 322 are copied, merely requires a capacity same as the memory size for the icons stored in the first customer area 322, to be copied. Thus, a memory space of a system area where a basic and critical data of the terminal store, can be more secured. For example, it will be assumed that there are 10 undeletable applications that need to be stored in the first customer area, and all of the 10 undeletable applications have the same capacity of 10 megabytes.

In the prior art of FIG. 1, if the 10 10-megabyte undeletable applications are stored in the first customer area 122, the first customer area 122 consumes the memory capacity of 100 megabytes. Therefore, in the booting mode of the terminal, the same memory capacity of 100 megabytes needs to be secured for the vacant space 121a of the system area 121, in which the undeletable applications in the first customer area 122 are to be copied.

However, in the present invention of FIG. 3, the first customer area 322 stores 10 icons indicating the 10 undeletable applications, instead of storing the 10 undeletable applications. If each icon has a capacity of 1 kilobyte, the first customer area 322 may consume the memory capacity of 10 kilobytes as it stores 10 1-kilobyte icons indicating the 10 undeletable applications. Therefore, in the booting mode of the terminal, only the same memory capacity of 10 kilobytes needs to be secured for the vacant space 321a of the system area 321, in which the icons indicating the undeletable applications in the first customer area 322 are to be copied.

As is apparent from the foregoing description, the inventive apparatus and method for partitioning a memory area for application preloading in a wireless terminal may remove an unnecessarily used space by variably adjusting two customer areas in which applications are stored at a customer's request. In addition, by storing icons indicating applications in a customer area, a system area needs to secure only a space for copying the icons in the customer area in a booting mode.

The above-described methods according to the present invention can be im plemented in hardware, firmware or as software or computer code that can be stored in a recording medium such as a CD ROM, an RAM, a floppy disk, a hard disk, or a magn eto-optical disk or computer code downloaded over a network originally stored on a re mote recording medium or a non-transitory machine readable medium and to be stored on a local recording medium, so that the methods described herein can be rendered in s uch software that is stored on the recording medium using a general purpose computer, or a special processor or in programmable or dedicated hardware, such as an ASIC or F PGA. As would be understood in the art, the computer, the processor, microprocessor c ontroller or the programmable hardware include memory components, e.g., RAM, RO M, Flash, etc. that may store or receive software or computer code that when accessed a nd executed by the computer, processor or hardware implement the processing methods described herein. In addition, it would be recognized that when a general purpose com puter accesses code for implementing the processing shown herein, the execution of the code transforms the general purpose computer into a special purpose computer for exe cuting the processing shown herein.

While the invention has been shown and described with reference to certain exemplary embodiments, such as a wireless terminal, thereof, it will be understood by those skilled in the art that various changes in form and details may be made therein without departing from the spirit and scope of the invention as defined by the appended claims and their equivalents.

## Claims

1. An apparatus **characterized by**:
a memory (220) having a customer area (222) and a user area(223), the customer area(222) including a first partition (222a) and a second partition (222b) for storing different types of applications, the respective partition being variably adjustable according to an amount of the applications stored in the respective partition; and
a controller(210) for installing the applications stored in the respective partition in the user area (223) during a booting mode of a wireless terminal.

2. The apparatus of claim 1, **characterized in that** the first partition (222a) stores undeletable applications and the second partition (222b) stores deletable applications.

3. The apparatus of claim 1, **characterized in that** the controller (210) copies undeletable applications stored in the first partition (222a) to the system area (221) of the memory (220) and installs the undeletable applications copied to the system area (221) in the user area (223) during the booting mode of the wireless terminal.

4. The apparatus of claim 1, **characterized in that** the controller (210) installs deletable applications stored in the second partition (222)b in the user area(223) during the booting mode of the wireless terminal.

5. The apparatus of claim 1, **characterized in that** the respective partitions are variably adjusted in a software manner through Application Processor (AP) binary of an application processor according to an amount of the applications to be stored in a corresponding area based on a request.

6. The apparatus of claim 1, **characterized in that** the controller (210) extracts area partitioning information of the memory (220) from a boot loader during the booting mode of the wireless terminal and determines customer area information of the memory(220).

7. The apparatus of claim 1, **characterized in that** the memory (220) further comprises a system area (220) to which undeletable applications stored in the first partition are copied during the booting mode of the wireless terminal,

8. The apparatus of claim 1, **characterized in that** the user area (223) stores the undeletable applications of the first partition (222a) that have been copied to the system area (221) and deletable applications stored in the second customer area (222b) during the booting mode of the wireless terminal.

9. An apparatus **characterized by**:
a memory (320) including a first customer area (322) in which icons indicating corresponding applications are stored and a second customer area (324) in which different types of the applications are stored; and
a controller (310) for installing the icons stored in the first customer area (322) in a user area (323) of the memory(320) during a booting mode of a wireless terminal.

10. The apparatus of claim 9, **characterized in that** the controller (310) extracts an application corresponding to an icon selected from the icons installed in the user area (323) from the second customer area (324) and installs the extracted application in the user area (323) after completing the booting mode of the wireless terminal.

11. The apparatus of claim 9, **characterized in that** the first customer area (322) stores icons indicating undeletable applications in response to a request.

12. The apparatus of claim 9, **characterized in that** the second customer area (324) stores deletable applications and undeletable applications corresponding to the icons stored in the first customer area (322) in response to a request.

13. The apparatus of claim 9, **characterized in that** the controller (310) installs deletable applications stored in the second customer area (324) in the user area (323).

14. The apparatus of claim 9, **characterized in that** the controller (310) copies the icons stored in the first customer area (322) to a system area (321) of the memory (320) and installs the copied icons in the user area (323), and if an icon is selected from the icons installed in the user area (323) after the booting mode of the wireless terminal is completed, extracts an undeletable application corresponding to the selected icon from the second customer area (324) and installs the extracted undeletable application in the user area(323).

15. The apparatus of claim 9, **characterized in that** the memory (320) further comprises:
a system area (320) to which the icons, indicating undeletable applications, stored in the first customer area (322) are copied in the booting mode of the wireless terminal.
